# EUROPÄISCHE PATENTSCHRIFT

(11) **EP 0 837 865 B1**
(45) Veröffentlichungstag und Bekanntmachung des Hinweises auf die Patenterteilung: **12.12.2001**
(21) Anmeldenummer: 96924831.9
(22) Anmeldetag: 01.07.1996
(51) Int. Cl.: C07F 17/00

(54) **VERFAHREN ZUR UMWANDLUNG DER ACHIRALEN MESO-FORM EINES ANSA-METALLOCENKOMPLEXES IN DIE CHIRALE RAC.-FORM**
PROCESS FOR CONVERTING THE ACHIRAL MESO FORM OF AN ANSA-METALLOCENE COMPLEX INTO THE CHIRAL RACEMIC FORM
PROCEDE DE TRANSFORMATION DE LA MESO-FORME ACHIRALE D'UN COMPLEXE ANSA-METALLOCENE EN LA FORME RACEMIQUE CHIRALE

(30) Priorität: 11.07.1995 DE 19525178
(43) Veröffentlichungstag der Anmeldung: 29.04.1998
(73) Patentinhaber: BASF AKTIENGESELLSCHAFT, 67056 Ludwigshafen (DE)
(72) Erfinder: FISCHER, David, D-67161 Gönnheim (DE); LANGHAUSER, Franz, D-67098 Bad Dürkheim (DE); KERTH, Jürgen, D-67316 Carlsberg (DE); SCHWEIER, Günther, D-67159 Friedelsheim (DE); BRINTZINGER, Hans-Herbert, CH-8274 Taegerswilen (CH); SCHMIDT, Katrin, D-78467 Konstanz (DE)
(86) Internationale Anmeldenummer: EP9602868
(87) Internationale Veröffentlichungsnummer: WO9703080

(56) Entgegenhaltungen:
- JOURNAL OF ORGANOMETALLIC CHEMISTRY, Bd. 232, 1982, Seiten 233-247, XP002015340 WILD, F.R.W.P. ET AL.: "ansa-metallocene derivatives. iv. synthesis and molecular structures of chiral ansa-titanocene derivatives with bridged tetrahydroindenyl ligands"
- THE JOURNAL OF ORGANIC CHEMISTRY, Bd. 54, 1989, Seiten 4154-4158, XP002015341 COLLINS, S. ET AL.: "additions of chiral allyltitanocenes to aldehydes: diastereoselective synthesis of homoallylic alcohols with a recyclable chiral transition metal reagent"
- JOURNAL OF ORGANOMETALLIC CHEMISTRY, Bd. 342, 1988, Seiten 21-29, XP002015342 COLLINS, S. ET AL.: "x-ray structures of ethylenebis(tetrahydroindenyl)-titanium and -zirconium dichlorides: a revision" in der Anmeldung erwähnt
- MAKROMOL. CHEM., RAPID COMMUN., Bd. 8, 1987, Seiten 305-310, XP000605211 TAKEMURA, S. ET AL.: "ISOTACTIC POLYMERIZATION OF PROPENE WITH (ETA-1,1'-ETHYLENEDI-4,5,6,7-TETRAHYDROIND ENYL)ZIRCONIUM DICHLORIDE COMBINED WITH METHYLALUMINOXANE"
- JOURNAL OF THE AMERICAN CHEMICAL SOCIETY, Bd. 114, 1992, Seiten 9300-9304, XP002015343 LEVI-MINZI, N. ET AL.: "PHOTOCHEMISTRY IN BIOLOGICAL MATRICES: ACTIVATION OF RACEMIC MIXTURES AND INTERCONVERSION OF ENANTIOMERS"

## Beschreibung

Die vorliegende Erfindung betrifft ein Verfahren zur Umwandlung der achiralen meso-Form eines ansa-Metallocenkomplexes in die chirale rac.-Form.

Chirale ansa-Metallocenkomplexe von Metallen der IV. Nebengruppe des Periodensystems der Elemente haben in den letzten Jahren groβes Interesse als leistungsfähige Katalysatoren für die stereospezifische Olefinpolymerisation gefunden, wie in der EP-A 444 474, der EP-A 519 237 und in der EP-A 576 970 beschrieben. Mit ihrer Hilfe gelingt die Herstellung chemisch einheitlicher Polyolefine hoher Isotaktizität. Allerdings fallen bei der Synthese solcher Metallocenkomplexe gewöhnlich beträchtliche Mengen der achiralen meso-Verbindung an, wodurch die Ausbeute an chiralen Metallocenkomplexen deutlich verringert wird. Da diese meso-Formen im allgemeinen die nichtstereospezifische 1-Olefinpolymerisation katalysieren, müssen sie abgetrennt werden, bevor das Racemat des Metallocenkomplexes als Polymerisationskatalysator verwendet werden kann (EP-A 485 823).

In der Vergangenheit hat es mehrere Versuche gegeben, das rac./ meso-Diastereomerenverhältnis bei der ansa-Metallocensynthese zu verbessern, oder zumindest die Abtrennung der meso-Verbindung einzusparen. Durch die Einführung eines α-ständigen Alkylsubstituenten in den Cyclopentadienylring konnte das rac./meso-Verhältnis deutlich über 1.0 erhöht werden, wie in Brintzinger et al, Journal of Organometallic Chemistry, 369 (1989), S. 359-370, beschrieben. Nachteilig hierbei ist, daß die Gestaltungsfreiheit der Liganden deutlich eingeschränkt wird. Hinzu kommt, daß trotz der verbesserten Ausbeute an racemischen Diastereomer immer noch beträchtliche Anteile (33 - 15 %) des meso-Komplexes gebildet werden.

Besser Ausbeuten des racemischen Diastereomeren konnten durch Umsetzung von Zr(NMe₂)₄ mit 1,2-Bisindenylethan erzielt werden, wie in Jordan et al., Organometallics, 14 (1995), S. 5 - 7, beschrieben. Nachteilig ist die große Empfindlichkeit und der hohe Preis des eingesetzten Tetrakis(dimethylamido)zirkon. Daneben sind diastereoselektive Synthesen chiraler ansa-Metallocene nur für sehr wenige, spezielle Ligandensysteme bekannt, die beispielsweise in Brintzinger et al., Organometallics 11, S. 3600-3607 (1992); S. Buchwald et al., Organometallics 13 (10), S. 3892-3840 (1994) und in der US-A 5,302,733 beschrieben sind.

In einigen Fällen konnte die Ausbeute an Racemat durch photochemische Umwandlung der unerwünschten meso-Form in die rac.-Form erhöht werden, wie in S. Collins et al., Journal of Organometallic Chemistry 342, S. 21 - 29 (1988) beschrieben. Allerdings wird auch hierbei die rac.-Form nur im thermodynamischen Gleichgewicht mit dem meso-Diastereomer erhalten. Eine quantitative Isomerisierung zur rac.-Form gelingt auf diesem Wege nicht.

Aufgabe der vorliegenden Erfindung war es daher, ein Verfahren zur quantitativen Umwandlung der unerwünschten meso-Form eines ansa-Metallocenkomplexes in die gewünschte rac.-Form zur Verfügung zu stellen, wobei diese Umwandlung verfahrenstechnisch einfach und kostengünstig sein sollte.

Demgemäß wurde ein Verfahren zur Umwandlung der achiralen meso-Form eines ansa-Metallocenkomplexes in die chirale rac.-Form gefunden, wobei die Umwandlung photochemisch in Anwesenheit eines chiralen Hilfsreagens erfolgt.

Die Begriffe "meso"- und "rac.-Form" in Verbindung mit ansa-Metallocenkomplexen sind bekannt und beispielsweise in Brintzinger et al., Journal of Organometallic Chemistry, 369 (1989), S. 359 - 370 beschrieben.

Als ansa-Metallocenkomplexe, die bei dem erfindungsgemäßen Verfahren eingesetzt werden können, eignen sich besonders solche, der allgemeinen Formel I 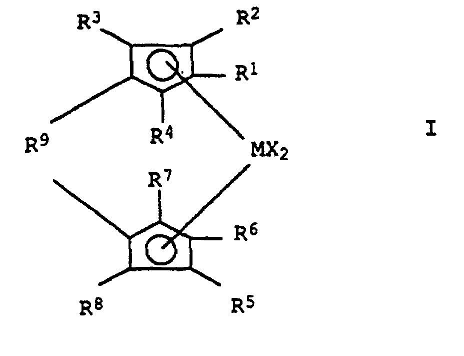 in der die Substituenten und Indices folgende Bedeutung haben:
- M: Titan, Zirkonium, Hafnium, Vanadium, Niob oder Tantal,
- X: Fluor, Chlor, Brom, Iod, Wasserstoff, C₁- bis C₁₀-Alkyl, C₆- bis C₁₅-Aryl oder -OR¹⁰,
- wobei R¹⁰: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
- R¹ bis R⁸: Wasserstoff, C₁- bis C₁₀-Alkyl, 5 - bis 7-gliedriges Cycloalkyl, das seinerseits ein C₁-bis C₁₀-Alkyl als Substituent tragen kann, C₆-bis C₁₅-Aryl oder Arylalkyl, wobei gegebenenfalls auch zwei benachbarte Reste gemeinsam für 4 bis C-Atome aufweisende cyclische Gruppen stehen können, oder Si(R¹¹)₃ mit
- R¹¹: C₁- bis C₁₀-Alkyl, C₆- bis C₁₅-Aryl oder C₃- bis C₁₀-Cycloalkyl,
- R⁹: 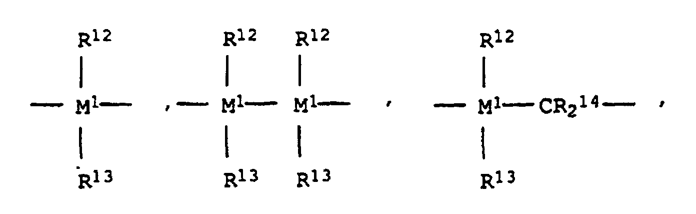 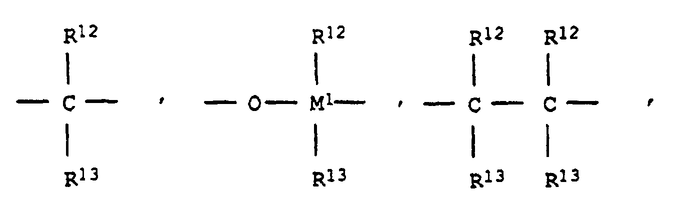 = BR¹², = AlR¹², -Ge-, -Sn-, -O-, -S-, = SO, = SO₂, = NR¹², = CO, = PR¹² oder = P (O) R¹² ist, wobei R¹², R¹³ und R¹⁴
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
- M¹: Silicium, Germanium oder Zinn ist.

Besonders geeignet sind ansa-Metallocenkomplexe der allgemeinen Formel I, in der
- M: für Titan, Zirkonium oder Hafnium steht,
- X: Chlor oder C₁- bis C₆-Alkyl bedeutet,
- R¹ bis R⁸: Wasserstoff, C₁- bis C₆-Alkyl, C₁- bis C₁₂-Aryl oder wobei zwei benachbarte Reste gemeinsam für 4 bis 15, insbesondere 8 bis 12 C-Atome aufweisende cyclische Gruppen stehen
- und M¹: Silicum bedeutet.

Bevorzugt sind ansa-Metallocenkomplexe der allgemeinen Formel I, die in 2-Position an den Cyclopentadienyl-Ringen substituiert sind, d.h., daß R⁴ und R⁷ in der allgemeinen Formel I von Wasserstoff verschieden sind und insbesondere für Methyl, Ethyl, n-Propyl, iso-Propyl, n-Butyl, tert.-Butyl oder Phenyl stehen.

Weiterhin sind solche ansa-Metallocenkomplexe bevorzugt, die silylverbrückt sind, d. h. daß M¹ für Silicium steht.

Beispiele für besonders geeignete ansa-Metallocenkomplexe sind u.a.:
Dimethylsilandiylbis(2-methyl-4-methyl-1-cyclopentadienyl)zirkoniumdichlorid
Dimethylsilandiylbis(2-methyl-4-ethyl-1-cyclopentadienyl)zirkoniumdichlorid
Dimethylsilandiylbis(2-methyl-4-propyl-1-cyclopentadienyl)zirkoniumdichlorid
Dimethylsilandiylbis(2-methyl-4-butyl-1-cyclopentadienyl)zirkoniumdichlorid
Dimethylsilandiylbis(2-methyl-4-ⁱpropyl-1-cyclopentadienyl)zirkoniumdichlorid
Dimethylsilandiylbis(2-methyl-4-ⁱbutyl-1-cyclopentadienyl)zirkoniumdichlorid
Dimethylsilandiylbis(2-methyl-4-^{t}butyl-1-cyclopentadienyl)zirkoniumdichlorid
Dimethylsilandiylbis(2-methyl-4-trimethylsilyl-1-cyclopentadienyl)zirkoniumdichlorid
Dimethylsilandiylbis(2-methyl-4-phenyl-l-cyclopentadienyl)zirkoniumdichlorid
Dimethylsilandiylbis(2-ethyl-4-methyl-1-cyclopentadienyl)zirkoniumdichlorid
Dimethylsilandiylbis(2-ethyl-4-ethyl-1-cyclopentadienyl)zirkoniumdichlorid
Dimethylsilandiylbis(2-ethyl-4-propyl-1-cyclopentadienyl)zirkoniumdichlorid
Dimethylsilandiylbis(2-ethyl-4-butyl-1-cyclopentadienyl)zirkoniumdichlorid
Dimethylsilandiylbis(2-ethyl-4-ⁱpropyl-1-cyclopentadienyl)zirkoniumdichlorid
Dimethylsilandiylbis(2-ethyl-4-ⁱbutyl-1-cyclopentadienyl)zirkoniumdichlorid
Dimethylsilandiylbis(2-ethyl-4-^{t}butyl-1-cyclopentadienyl)zirkoniumdichlorid
Dimethylsilandiylbis(2-ethyl-4-trimethylsilyl-1-cyclopentadienyl)zirkoniumdichlorid
Dimethylsilandiylbis(2-ethyl-4-phenyl-1-cyclopentadienyl)zirkoniumdichlorid
Dimethylsilandiylbis(2-propyl-4-methyl-1-cyclopentadienyl)zirkoniumdichlorid
Dimethylsilandiylbis(2-propyl-4-ethyl-1-cyclopentadienyl)zirkoniumdichlorid
Dimethylsilandiylbis(2-propyl-4-propyl-1-cyclopentadienyl)zirkoniumdichlorid
Dimethylsilandiylbis(2-propyl-4-butyl-1-cyclopentadienyl)zirkoniumdichlorid
Dimethylsilandiylbis(2-propyl-4-ⁱpropyl-1-cyclopentadienyl)zirkoniumdichlorid
Dimethylsilandiylbis(2-propyl-4-ⁱbutyl-1-cyclopentadienyl)zirkoniumdichlorid
Dimethylsilandiylbis(2-propyl-4-^{t}butyl-1-cyclopentadienyl)zirkoniumdichlorid
Dimethylsilandiylbis(2-propyl-4-trimethylsilyl-1-cyclopentadienyl)zirkoniumdichlorid
Dimethylsilandiylbis(2-propyl-4-phenyl-1-cyclopentadienyl)zirkoniumdichlorid
Dimethylsilandiylbis(2-butyl-4-methyl-1-cyclopentadienyl)zirkoniumdichlorid
Dimethylsilandiylbis(2-butyl-4-ethyl-1-cyclopentadienyl)zirkoniumdichlorid
Dimethylsilandiylbis(2-butyl-4-propyl-1-cyclopentadienyl)zirkoniumdichlorid
Dimethylsilandiylbis(2-butyl-4-butyl-1-cyclopentadienyl)zirkoniumdichlorid
Dimethylsilandiylbis(2-butyl-4-ⁱpropyl-1-cyclopentadienyl)zirkoniumdichlorid
Dimethylsilandiylbis(2-butyl-4-ⁱbutyl-1-cyclopentadienyl)zirkoniumdichlorid
Dimethylsilandiylbis(2-butyl-4-^{t}butyl-1-cyclopentadienyl)zirkoniumdichlorid
Dimethylsilandiylbis(2-butyl-4-trimethylsilyl-1-cyclopentadienyl)zirkoniumdichlorid
Dimethylsilandiylbis(2-butyl-4-phenyl-1-cyclopentadienyl)zirkoniumdichlorid
Dimethylsilandiylbis(2-ipropyl-4-methyl-1-cyclopentadienyl)zirkoniumdichlorid
Dimethylsilandiylbis(2-ⁱpropyl-4-ethyl-1-cyclopentadienyl)zirkoniumdichlorid
Dimethylsilandiylbis(2-ⁱpropyl-4-propyl-1-cyclopentadienyl)zirkoniumdichlorid
Dimethylsilandiylbis(2-ⁱpropyl-4-butyl-1-cyclopentadienyl)zirkoniumdichlorid
Dimethylsilandiylbis(2-ⁱpropyl-4-ⁱpropyl-1-cyclopentadienyl)zirkoniumdichlorid
Dimethylsilandiylbis(2-ⁱpropyl-4-ⁱbutyl-1-cyclopentadienyl)zirkoniumdichlorid
Dimethylsilandiylbis(2-ⁱpropyl-4-^{t}butyl-1-cyclopentadienyl)zirkoniumdichlorid
Dimethylsilandiylbis(2-ⁱpropyl-4-trimethylsilyl-1-cyclopentadienyl)zirkoniumdichlorid
Dimethylsilandiylbis(2-ⁱpropyl-4-phenyl-1-cyclopentadienyl)zirkoniumdichlorid
Dimethylsilandiylbis(2-^{t}butyl-4-methyl-1-cyclopentadienyl)zirkoniumdichlorid
Dimethylsilandiylbis(2-^{t}butyl-4-ethyl-1-cyclopentadienyl)zirkoniumdichlorid
Dimethylsilandiylbis(2-^{t}butyl-4-propyl-1-cyclopentadienyl)zirkoniumdichlorid
Dimethylsilandiylbis(2-^{t}butyl-4-butyl-1-cyclopentadienyl)zirkoniumdichlorid
Dimethylsilandiylbis(2-^{t}butyl-4-ⁱpropyl-1-cyclopentadienyl)zirkoniumdichlorid
Dimethylsilandiylbis(2-^{t}butyl-4-ⁱbutyl-1-cyclopentadienyl)zirkoniumdichlorid
Dimethylsilandiylbis(2-^{t}butyl-4-^{t}butyl-1-cyclopentadienyl)zirkoniumdichlorid
Dimethylsilandiylbis(2-^{t}butyl-4-trimethylsilyl-1-cyclopentadienyl)zirkoniumdichlorid
Dimethylsilandiylbis(2-^{t}butyl-4-phenyl-1-cyclopentadienyl)zirkoniumdichlorid
Dimethylsilandiylbis(2-trimethylsilyl-4-methyl-1-cyclopentadienyl)zirkoniumdichlorid
Dimethylsilandiylbis(2-trimethylsilyl-4-ethyl-1-cyclopentadienyl)zirkoniumdichlorid
Dimethylsilandiylbis(2-trimethylsilyl-4-propyl-1-cyclopentadienyl)zirkoniumdichlorid
Dimethylsilandiylbis(2-trimethylsilyl-4-butyl-1-cyclopentadienyl)zirkoniumdichlorid
Dimethylsilandiylbis(2-trimethylsilyl-4-ⁱpropyl-1-cyclopentadienyl)zirkoniumdichlorid
Dimethylsilandiylbis(2-trimethylsilyl-4-ⁱbutyl-1-cyclopentadienyl)zirkoniumdichlorid
Dimethylsilandiylbis(2-trimethylsilyl-4-^{t}butyl-1-cyclopentadienyl)zirkoniumdichlorid
Dimethylsilandiylbis(2-trimethylsilyl-4-trimethylsilyl-1-cyclopentadienyl)zirkoniumdichlorid
Dimethylsilandiylbis(2-trimethylsilyl-4-phenyl-1-cyclopentadienyl)zirkoniumdichlorid
Dimethylsilandiylbis(2-phenyl-4-methyl-1-cyclopentadienyl)zirkoniumdichlorid
Dimethylsilandiylbis(2-phenyl-4-ethyl-1-cyclopentadienyl)zirkoniumdichlorid
Dimethylsilandiylbis(2-phenyl-4-propyl-1-cyclopentadienyl)zirkoniumdichlorid
Dimethylsilandiylbis(2-phenyl-4-butyl-1-cyclopentadienyl)zirkoniumdichlorid
Dimethylsilandiylbis(2-phenyl-4-ⁱpropyl-1-cyclopentadienyl)zirkoniumdichlorid
Dimethylsilandiylbis(2-phenyl-4-ⁱbutyl-1-cyclopentadienyl)zirkoniumdichlorid
Dimethylsilandiylbis(2-phenyl-4-^{t}butyl-1-cyclopentadienyl)zirkoniumdichlorid
Dimethylsilandiylbis(2-phenyl-4-trimethylsilyl-1-cyclopentadienyl)zirkoniumdichlorid
Dimethylsilandiylbis(2-phenyl-4-phenyl-1-cyclopentadienyl)zirkoniumdichlorid
Dimethylsilandiylbis(2-methyl-1-indenyl)zirkoniumdichlorid
Dimethylsilandiylbis(2-ethyl-1-indenyl)zirkoniumdichlorid
Dimethylsilandiylbis(2-propyl-1-indenyl)zirkoniumdichlorid
Dimethylsilandiylbis(2-butyl-1-indenyl)zirkoniumdichlorid
Dimethylsilandiylbis(2-ⁱpropyl-1-indenyl)zirkoniumdichlorid
Dimethylsilandiylbis(2-^{t}butyl-1-indenyl)zirkoniumdichlorid
Dimethylsilandiylbis(2-trimethylsilyl-1-indenyl)zirkoniumdichlorid
Dimethylsilandiylbis(2-phenyl-1-indenyl)zirkoniumdichlorid
Dimethylsilandiylbis(2-methyl-4,5,6,7-tetra-hydro-1-indenyl)zirkoniumdichlorid
Dimethylsilandiylbis(2-ethyl-4,5,6,7-tetra-hydro-1-indenyl)zirkoniumdichlorid
Dimethylsilandiylbis(2-propyl-4,5,6,7-tetra-hydro-1-indenyl)zirkoniumdichlorid
Dimethylsilandiylbis(2-butyl-4,5,6,7-tetra-hydro-1-indenyl)zirkoniumdichlorid
Dimethylsilandiylbis(2-ⁱpropyl-4,5,6,7-tetra-hydro-l-indenyl)zirkoniumdichlorid
Dimethylsilandiylbis(2-^{t}butyl-4,5,6,7-tetra-hydro-1-indenyl)zirkoniumdichlorid
Dimethylsilandiylbis(2-trimethylsilyl-4,5,6,7-tetra-hydro-1-indenyl)zirkoniumdichlorid
Dimethylsilandiylbis(2-phenyl-4,5,6,7-tetra-hydro-1-indenyl)zirkoniumdichlorid
Dimethylsilandiylbis(2-methyl-4,7-dimethyl-1-indenyl)zirkoniumdichlorid
Dimethylsilandiylbis(2-ethyl-4,7-dimethyl-1-indenyl)zirkoniumdichlorid
Dimethylsilandiylbis(2-propyl-4,7-dimethyl-1-indenyl)zirkoniumdichlorid
Dimethylsilandiylbis(2-butyl-4,7-dimethyl-1-indenyl)zirkoniumdichlorid
Dimethylsilandiylbis(2-ⁱpropyl-4,7-dimethyl-1-indenyl)zirkoniumdichlorid
Dimethylsilandiylbis(2-^{t}butyl-4,7-dimethyl-1-indenyl)zirkoniumdichlorid
Dimethylsilandiylbis(2-trimethylsilyl-4,7-dimethyl-1-indenyl)zirkoniumdichlorid
Dimethylsilandiylbis(2-phenyl-4,7-dimethyl-1-indenyl)zirkoniumdichlorid
Dimethylsilandiylbis(2-methyl-4,6-di-ⁱpropyl-1-indenyl)zirkoniumdichlorid
Dimethylsilandiylbis(2-ethyl-4,6-di-ⁱpropyl-1-indenyl)zirkoniumdichlorid
Dimethylsilandiylbis(2-propyl-4,6-di-ⁱpropyl-1-indenyl)zirkoniumdichlorid
Dimethylsilandiylbis(2-butyl-4,6-di-ⁱpropyl-1-indenyl)zirkoniumdichlorid
Dimethylsilandiylbis(2-ⁱpropyl-4,6-di-ⁱpropyl-1-indenyl)zirkoniumdichlorid
Dimethylsilandiylbis(2-^{t}butyl-4,6-di-ⁱpropyl-1-indenyl)zirkoniumdichlorid
Dimethylsilandiylbis(2-trimethylsilyl-4,6-di-ⁱpropyl-1-indenyl)zirkoniumdichlorid
Dimethylsilandiylbis(2-phenyl-4,6-di-ⁱpropyl-1-indenyl)zirkoniumdichlorid
Dimethylsilandiylbis(2-methyl-1-benzindenyl)zirkoniumdichlorid
Dimethylsilandiylbis(2-ethyl-1-benzindenyl)zirkoniumdichlorid
Dimethylsilandiylbis(2-propyl-1-benzindenyl)zirkoniumdichlorid
Dimethylsilandiylbis(2-butyl-1-benzindenyl)zirkoniumdichlorid
Dimethylsilandiylbis(2-ⁱpropyl-1-benzindenyl)zirkoniumdichlorid
Dimethylsilandiylbis(2-^{t}butyl-1-benzindenyl)zirkoniumdichlorid
Dimethylsilandiylbis(2-trimethylsilyl-1-benzindenyl)zirkoniumdichlorid
Dimethylsilandiylbis(2-phenyl-1-benzindenyl)zirkoniumdichlorid
Dimethylsilandiylbis(2-methyl-4-phenyl-1-indenyl)zirkoniumdichlorid
Dimethylsilandiylbis(2-ethyl-4-phenyl-1-indenyl)zirkoniumdichlorid
Dimethylsilandiylbis(2-propyl-4-phenyl-1-indenyl)zirkoniumdichlorid
Dimethylsilandiylbis(2-butyl-4-phenyl-1-indenyl)zirkoniumdichlorid
Dimethylsilandiylbis(2-ⁱpropyl-4-phenyl-1-indenyl)zirkoniumdichlorid
Dimethylsilandiylbis(2-^{t}butyl-4-phenyl-1-indenyl)zirkoniumdichlorid
Dimethylsilandiylbis(2-trimethylsilyl-4-phenyl-1-indenyl)zirkoniumdichlorid
Dimethylsilandiylbis(2-phenyl-4-phenyl-1-indenyl)zirkoniumdichlorid
Dimethylsilandiylbis(2-methyl-4-naphthyl-1-indenyl)zirkoniumdichlorid
Dimethylsilandiylbis(2-ethyl-4-naphthyl-1-indenyl)zirkoniumdichlorid
Dimethylsilandiylbis(2-propyl-4-naphthyl-1-indenyl)zirkoniumdichlorid
Dimethylsilandiylbis(2-butyl-4-naphthyl-1-indenyl)zirkoniumdichlorid
Dimethylsilandiylbis(2-ⁱpropyl-4-naphthyl-1-indenyl)zirkoniumdichlorid
Dimethylsilandiylbis(2-^{t}butyl-4-naphthyl-1-indenyl)zirkoniumdichlorid
Dimethylsilandiylbis(2-trimethylsilyl-4-naphthyl-1-indenyl)zirkoniumdichlorid
Dimethylsilandiylbis(2-phenyl-4-naphthyl-1-indenyl)zirkoniumdichlorid
Dimethylsilandiylbis(2-methyl-4-methyl-1-cyclopentadienyl)titaniumdichlorid
Dimethylsilandiylbis(2-methyl-4-ethyl-1-cyclopentadienyl)titaniumdichlorid
Dimethylsilandiylbis(2-methyl-4-propyl-1-cyclopentadienyl)titaniumdichlorid
Dimethylsilandiylbis (2-methyl-4-butyl-1-cyclopentadienyl)titaniumdichlorid
Dimethylsilandiylbis(2-methyl-4-ⁱpropyl-1-cyclopentadienyl)titaniumdichlorid
Dimethylsilandiylbis(2-methyl-4-ⁱbutyl-1-cyclopentadienyl)titaniumdichlorid
Dimethylsilandiylbis(2-methyl-4-^{t}butyl-1-cyclopentadienyl)titaniumdichlorid
Dimethylsilandiylbis(2-methyl-4-trimethylsilyl-1-cyclopentadienyl)titaniumdichlorid
Dimethylsilandiylbis(2-methyl-4-phenyl-1-cyclopentadienyl)titaniumdichlorid
Dimethylsilandiylbis(2-ethyl-4-methyl-1-cyclopentadienyl)titaniumdichlorid
Dimethylsilandiylbis(2-ethyl-4-ethyl-1-cyclopentadienyl)titaniumdichlorid
Dimethylsilandiylbis(2-ethyl-4-propyl-1-cyclopentadienyl)titaniumdichlorid
Dimethylsilandiylbis(2-ethyl-4-butyl-1-cyclopentadienyl)titaniumdichlorid
Dimethylsilandiylbis(2-ethyl-4-ⁱpropyl-1-cyclopentadienyl)titaniumdichlorid
Dimethylsilandiylbis(2-ethyl-4-ⁱbutyl-1-cyclopentadienyl)titaniumdichlorid
Dimethylsilandiylbis(2-ethyl-4-^{t}butyl-1-cyclopentadienyl)titaniumdichlorid
Dimethylsilandiylbis(2-ethyl-4-trimethylsilyl-1-cyclopentadienyl)titaniumdichlorid
Dimethylsilandiylbis(2-ethyl-4-phenyl-1-cyclopentadienyl)titaniumdichlorid
Dimethylsilandiylbis(2-propyl-4-methyl-1-cyclopentadienyl)titaniumdichlorid
Dimethylsilandiylbis(2-propyl-4-ethyl-1-cyclopentadienyl)titaniumdichlorid
Dimethylsilandiylbis(2-propyl-4-propyl-1-cyclopentadienyl)titaniumdichlorid
Dimethylsilandiylbis(2-propyl-4-butyl-1-cyclopentadienyl)titaniumdichlorid
Dimethylsilandiylbis(2-propyl-4-ⁱpropyl-1-cyclopentadienyl)titaniumdichlorid
Dimethylsilandiylbis(2-propyl-4-ⁱbutyl-1-cyclopentadienyl)titaniumdichlorid
Dimethylsilandiylbis(2-propyl-4-^{t}butyl-1-cyclopentadienyl)titaniumdichlorid
Dimethylsilandiylbis(2-propyl-4-trimethylsilyl-1-cyclopentadienyl)titaniumdichlorid
Dimethylsilandiylbis(2-propyl-4-phenyl-1-cyclopentadienyl)titaniumdichlorid
Dimethylsilandiylbis(2-butyl-4-methyl-1-cyclopentadienyl)titaniumdichlorid
Dimethylsilandiylbis(2-butyl-4-ethyl-1-cyclopentadienyl)titaniumdichlorid
Dimethylsilandiylbis(2-butyl-4-propyl-1-cyclopentadienyl)titaniumdichlorid
Dimethylsilandiylbis(2-butyl-4-butyl-1-cyclopentadienyl)titaniumdichlorid
Dimethylsilandiylbis(2-butyl-4-ⁱpropyl-1-cyclopentadienyl)titaniumdichlorid
Dimethylsilandiylbis(2-butyl-4-ⁱbutyl-1-cyclopentadienyl)titaniumdichlorid
Dimethylsilandiylbis(2-butyl-4-^{t}butyl-1-cyclopentadienyl)titaniumdichlorid
Dimethylsilandiylbis(2-butyl-4-trimethylsilyl-1-cyclopentadienyl)titaniumdichlorid
Dimethylsilandiylbis(2-butyl-4-phenyl-1-cyclopentadienyl)titaniumdichlorid
Dimethylsilandiylbis(2-ⁱpropyl-4-methyl-1-cyclopentadienyl)titaniumdichlorid
Dimethylsilandiylbis(2-ⁱpropyl-4-ethyl-1-cyclopentadienyl)titaniumdichlorid
Dimethylsilandiylbis (2-ⁱpropyl-4-propyl-1-cyclopentadienyl)titaniumdichlorid
Dimethylsilandiylbis(2-ⁱpropyl-4-butyl-1-cyclopentadienyl)titaniumdichlorid
Dimethylsilandiylbis(2-ⁱpropyl-4-ⁱpropyl-1-cyclopentadienyl)titaniumdichlorid
Dimethylsilandiylbis(2-ⁱpropyl-4-ⁱbutyl-1-cyclopentadienyl)titaniumdichlorid
Dimethylsilandiylbis(2-ⁱpropyl-4-^{t}butyl-1-cyclopentadienyl)titaniumdichlorid
Dimethylsilandiylbis(2-ⁱpropyl-4-trimethylsilyl-1-cyclopentadienyl)titaniumdichlorid
Dimethylsilandiylbis(2-ⁱpropyl-4-phenyl-1-cyclopentadienyl)titaniumdichlorid
Dimethylsilandiylbis(2-^{t}butyl-4-methyl-1-cyclopentadienyl)titaniumdichlorid
Dimethylsilandiylbis(2-^{t}butyl-4-ethyl-1-cyclopentadienyl)titaniumdichlorid
Dimethylsilandiylbis(2-^{t}butyl-4-propyl-1-cyclopentadienyl)titaniumdichlorid
Dimethylsilandiylbis(2-^{t}butyl-4-butyl-1-cyclopentadienyl)titaniun dichlorid
Dimethylsilandiylbis(2-^{t}butyl-4-ⁱpropyl-1-cyclopentadienyl)titaniumdichlorid
Dimethylsilandiylbis(2-^{t}butyl-4-ⁱbutyl-1-cyclopentadienyl)titaniumdichlorid
Dimethylsilandiylbis(2-^{t}butyl-4-^{t}butyl-1-cyclopentadienyl)titaniumdichlorid
Dimethylsilandiylbis(2-^{t}butyl-4-trimethylsilyl-1-cyclopentadienyl)titaniumdichlorid
Dimethylsilandiylbis(2-^{t}butyl-4-phenyl-1-cyclopentadienyl)titaniumdichlorid
Dimethylsilandiylbis(2-trimethylsilyl-4-methyl-1-cyclopentadienyl)titaniumdichlorid
Dimethylsilandiylbis(2-trimethylsilyl-4-ethyl-1-cyclopentadienyl)titaniumdichlorid
Dimethylsilandiylbis(2-trimethylsilyl-4-propyl-1-cyclopentadienyl)titaniumdichlorid
Dimethylsilandiylbis(2-trimethylsilyl-4-butyl-1-cyclopentadienyl)titaniumdichlorid
Dimethylsilandiylbis(2-trimethylsilyl-4-ipropyl-1-cyclopentadienyl)titaniumdichlorid
Dimethylsilandiylbis(2-trimethylsilyl-4-ⁱbutyl-1-cyclopentadienyl)titaniumdichlorid
Dimethylsilandiylbis(2-trimethylsilyl-4-^{t}butyl-1-cyclopentadienyl)titaniumdichlorid.
Dimethylsilandiylbis(2-trimethylsilyl-4-trimethylsilyl-1-cyclopentadienyl)titaniumdichlorid
Dimethylsilandiylbis(2-trimethylsilyl-4-phenyl-1-cyclopentadienyl)titaniumdichlorid
Dimethylsilandiylbis(2-phenyl-4-methyl-1-cyclopentadienyl)titaniumdichlorid
Dimethylsilandiylbis(2-phenyl-4-ethyl-1-cyclopentadienyl)titaniumdichlorid
Dimethylsilandiylbis(2-phenyl-4-propyl-l-cyclopentadienyl)titaniumdichlorid
Dimethylsilandiylbis(2-phenyl-4-butyl-1-cyclopentadienyl)titaniumdichlorid
Dimethylsilandiylbis(2-phenyl-4-ⁱpropyl-1-cyclopentadienyl)titaniumdichlorid
Dimethylsilandiylbis(2-phenyl-4-ⁱbutyl-1-cyclopentadienyl)titaniumdichlorid
Dimethylsilandiylbis(2-phenyl-4-^{t}butyl-1-cyclopentadienyl)titaniumdichlorid
Dimethylsilandiylbis(2-phenyl-4-trimethylsilyl-l-cyclopentadienyl)titaniumdichlorid
Dimethylsilandiylbis(2-phenyl-4-phenyl-1-cyclopentadienyl)titaniumdichlorid
Dimethylsilandiylbis(2-methyl-l-indenyl)titaniumdichlorid
Dimethylsilandiylbis(2-ethyl-1-indenyl)titaniumdichlorid
Dimethylsilandiylbis(2-propyl-1-indenyl)titaniumdichlorid
Dimethylsilandiylbis(2-butyl-1-indenyl)titaniumdichlorid
Dimethylsilandiylbis(2-ⁱpropyl-1-indenyl)titaniumdichlorid
Dimethylsilandiylbis(2-^{t}butyl-1-indenyl)titaniumdichlorid
Dimethylsilandiylbis(2-trimethylsilyl-l-indenyl)titaniumdichlorid
Dimethylsilandiylbis(2-phenyl-1-indenyl)titaniumdichlorid
Dimethylsilandiylbis(2-methyl-4,5,6,7-tetrahydro-1-indenyl)titaniumdichlorid
Dimethylsilandiylbis(2-ethyl-4,5,6,7-tetrahydro-1-indenyl)titaniumdichlorid
Dimethylsilandiylbis(2-propyl-4,5,6,7-tetrahydro-1-indenyl)titaniumdichlorid
Dimethylsilandiylbis(2-butyl-4,5,6,7-tetrahydro-1-indenyl)titaniumdichlorid
Dimethylsilandiylbis(2-ⁱpropyl-4,5,6,7-tetrahydro-1-indenyl)titaniumdichlorid
Dimethylsilandiylbis (2-^{t}butyl-4,5,6,7-tetrahydro-1-indenyl)titaniumdichlorid
Dimethylsilandiylbis(2-trimethylsilyl-4,5,6,7-tetrahydro-1-indenyl)titaniumdichlorid
Dimethylsilandiylbis(2-phenyl-4,5,6,7-tetrahydro-1-indenyl)titaniumdichlorid
Dimethylsilandiylbis(2-methyl-4,7-dimethyl-1-indenyl)titaniumdichlorid
Dimethylsilandiylbis(2-ethyl-4,7-dimethyl-1-indenyl)titaniumdichlorid
Dimethylsilandiylbis(2-propyl-4,7-dimethyl-1-indenyl)titaniumdichlorid
Dimethylsilandiylbis(2-butyl-4,7-dimethyl-1-indenyl)titaniumdichlorid
Dimethylsilandiylbis(2-ⁱpropyl-4,7-dimethyl-1-indenyl)titaniumdichlorid
Dimethylsilandiylbis(2-^{t}butyl-4,7-dimethyl-1-indenyl)titaniumdichlorid
Dimethylsilandiylbis(2-trimethylsilyl-4,7-dimethyl-1-indenyl)titaniumdichlorid
Dimethylsilandiylbis(2-phenyl-4,7-dimethyl-1-indenyl)titaniumdichlorid
Dimethylsilandiylbis(2-methyl-4,6-di-ⁱpropyl-1-indenyl)titaniumdichlorid
Dimethylsilandiylbis(2-ethyl-4,6-di-ⁱpropyl-1-indenyl)titaniumdichlorid
Dimethylsilandiylbis(2-propyl-4,6-di-ⁱpropyl-1-indenyl)titaniumdichlorid
Dimethylsilandiylbis(2-butyl-4,6-di-ⁱpropyl-1-indenyl)titaniumdichlorid
Dimethylsilandiylbis(2-ⁱpropyl-4,6-di-ⁱpropyl-1-indenyl)titaniumdichlorid
Dimethylsilandiylbis(2-^{t}butyl-4,6-di-ⁱpropyl-1-indenyl)titaniumdichlorid
Dimethylsilandiylbis(2-trimethylsilyl-4,6-di-ⁱpropyl-1-indenyl)titaniumdichlorid
Dimethylsilandiylbis(2-phenyl-4,6-di-ⁱpropyl-1-indenyl)titaniumdichlorid
Dimethylsilandiylbis(2-methyl-1-benzindenyl)titaniumdichlorid
Dimethylsilandiylbis(2-ethyl-1-benzindenyl)titaniumdichlorid
Dimethylsilandiylbis(2-propyl-1-benzindenyl)titaniumdichlorid
Dimethylsilandiylbis(2-butyl-1-benzindenyl)titaniumdichlorid
Dimethylsilandiylbis(2-ⁱpropyl-1-benzindenyl)titaniumdichlorid
Dimethylsilandiylbis(2-^{t}butyl-1-benzindenyl)titaniumdichlorid
Dimethylsilandiylbis(2-trimethylsilyl-1-benzindenyl)titaniumdichlorid
Dimethylsilandiylbis (2-phenyl-1-benzindenyl)titaniumdichlorid
Dimethylsilandiylbis(2-methyl-4-phenyl-1-indenyl)titaniumdichlorid
Dimethylsilandiylbis(2-ethyl-4-phenyl-1-indenyl)titaniumdichlorid
Dimethylsilandiylbis(2-propyl-4-phenyl-1-indenyl)titaniumdichlorid
Dimethylsilandiylbis(2-butyl-4-phenyl-1-indenyl)titaniumdichlorid
Dimethylsilandiylbis(2-ⁱpropyl-4-phenyl-1-indenyl)titaniumdichlorid
Dimethylsilandiylbis(2-^{t}butyl-4-phenyl-1-indenyl)titaniumdichlorid
Dimethylsilandiylbis(2-trimethylsilyl-4-phenyl-1-indenyl)titaniumdichlorid
Dimethylsilandiylbis(2-phenyl-4-phenyl-1-indenyl)titaniumdichlorid
Dimethylsilandiylbis(2-methyl-4-naphthyl-1-indenyl)titaniumdichlorid
Dimethylsilandiylbis(2-ethyl-4-naphthyl-1-indenyl)titaniumdichlorid
Dimethylsilandiylbis(2-propyl-4-naphthyl-1-indenyl)titaniumdichlorid
Dimethylsilandiylbis(2-butyl-4-naphthyl-1-indenyl)titaniumdichlorid
Dimethylsilandiylbis(2-ⁱpropyl-4-naphthyl-1-indenyl)titaniumdichorid
Dimethylsilandiylbis(2-^{t}butyl-4-naphthyl-1-indenyl)titaniumdichlorid
Dimethylsilandiylbis(2-trimethylsilyl-4-naphthyl-1-indenyl)titaniumdichlorid
Dimethylsilandiylbis(2-phenyl-4-naphthyl-1-indenyl)titaniumdichlorid
Dimethylsilandiylbis(2-methyl-4-methyl-1-cyclopentadienyl)hafniumdichlorid
Dimethylsilandiylbis(2-methyl-4-ethyl-1-cyclopentadienyl)hafniumdichlorid
Dimethylsilandiylbis(2-methyl-4-propyl-1-cyclopentadienyl)hafniumdichlorid
Dimethylsilandiylbis(2-methyl-4-butyl-1-cyclopentadienyl)hafniumdichlorid
Dimethylsilandiylbis(2-methyl-4-ⁱpropyl-1-cyclopentadienyl)hafniumdichlorid
Dimethylsilandiylbis(2-methyl-4-ⁱbutyl-1-cyclopentadienyl)hafniumdichlorid
Dimethylsilandiylbis(2-methyl-4-^{t}butyl-1-cyclopentadienyl)hafniumdichlorid
Dimethylsilandiylbis(2-methyl-4-trimethylsilyl-1-cyclopentadienyl)hafniumdichlorid
Dimethylsilandiylbis(2-methyl-4-phenyl-l-cyclopentadienyl)hafniumdichlorid
Dimethylsilandiylbis(2-ethyl-4-methyl-l-cyclopentadienyl)hafniumdichlorid
Dimethylsilandiylbis(2-ethyl-4-ethyl-1-cyclopentadienyl)hafniumdichlorid
Dimethylsilandiylbis(2-ethyl-4-propyl-1-cyclopentadienyl)hafniumdichlorid
Dimethylsilandiylbis(2-ethyl-4-butyl-l-cyclopentadienyl)hafniumdichlorid
Dimethylsilandiylbis(2-ethyl-4-ⁱpropyl-1-cyclopentadienyl)hafniumdichlorid
Dimethylsilandiylbis(2-ethyl-4-ⁱbutyl-1-cyclopentadienyl)hafniumdichlorid
Dimethylsilandiylbis(2-ethyl-4-^{t}butyl-1-cyclopentadienyl)hafniumdichlorid
Dimethylsilandiylbis(2-ethyl-4-trimethylsilyl-1-cyclopentadienyl)hafniumdichlorid
Dimethylsilandiylbis(2-ethyl-4-phenyl-1-cyclopentadienyl)hafniumdichlorid
Dimethylsilandiylbis(2-propyl-4-methyl-l-cyclopentadienyl)hafniumdichlorid
Dimethylsilandiylbis(2-propyl-4-ethyl-1-cyclopentadienyl)hafniumdichlorid
Dimethylsilandiylbis(2-propyl-4-propyl-1-cyclopentadienyl)hafniumdichlorid
Dimethylsilandiylbis(2-propyl-4-butyl-1-cyclopentadienyl)hafniumdichlorid
Dimethylsilandiylbis(2-propyl-4-ⁱpropyl-1-cyclopentadienyl)hafniumdichlorid
Dimethylsilandiylbis(2-propyl-4-ⁱbutyl-1-cyclopentadienyl)hafniumdichlorid
Dimethylsilandiylbis(2-propyl-4-^{t}butyl-1-cyclopentadienyl)hafniumdichlorid
Dimethylsilandiylbis(2-propyl-4-trimethylsilyl-1-cyclopentadienyl)hafniumdichlorid
Dimethylsilandiylbis(2-propyl-4-phenyl-1-cyclopentadienyl)hafniumdichlorid
Dimethylsilandiylbis(2-butyl-4-methyl-1-cyclopentadienyl)hafniumdichlorid
Dimethylsilandiylbis(2-butyl-4-ethyl-1-cyclopentadienyl)hafniumdichlorid
Dimethylsilandiylbis(2-butyl-4-propyl-1-cyclopentadienyl)hafniumdichlorid
Dimethylsilandiylbis(2-butyl-4-butyl-1-cyclopentadienyl)hafniumdichlorid
Dimethylsilandiylbis(2-butyl-4-ⁱpropyl-1-cyclopentadienyl)hafniumdichlorid
Dimethylsilandiylbis(2-butyl-4-ⁱbutyl-1-cyclopentadienyl)hafniumdichlorid
Dimethylsilandiylbis(2-butyl-4-^{t}butyl-1-cyclopentadienyl)hafniumdichlorid
Dimethylsilandiylbis(2-butyl-4-trimethylsilyl-1-cyclopentadienyl)hafniumdichlorid
Dimethylsilandiylbis(2-butyl-4-phenyl-1-cyclopentadienyl)hafniumdichlorid
Dimethylsilandiylbis(2-ⁱpropyl-4-methyl-1-cyclopentadienyl)hafniumdichlorid
Dimethylsilandiylbis(2-ⁱpropyl-4-ethyl-1-cyclopentadienyl)hafniumdichlorid
Dimethylsilandiylbis(2-ⁱpropyl-4-propyl-1-cyclopentadienyl)hafniumdichlorid
Dimethylsilandiylbis(2-ⁱpropyl-4-butyl-1-cyclopentadienyl)hafniumdichlorid
Dimethylsilandiylbis(2-ⁱpropyl-4-ⁱpropyl-1-cyclopentadienyl)hafniumdichlorid
Dimethylsilandiylbis(2-ⁱpropyl-4-ⁱbutyl-1-cyclopentadienyl)hafniumdichlorid
Dimethylsilandiylbis(2-ⁱpropyl-4-^{t}butyl-1-cyclopentadienyl)hafniumdichlorid
Dimethylsilandiylbis(2-ⁱpropyl-4-trimethylsilyl-1-cyclopentadienyl)hafniumdichlorid
Dimethylsilandiylbis(2-ⁱpropyl-4-phenyl-1-cyclopentadienyl)hafniumdichlorid
Dimethylsilandiylbis(2-^{t}butyl-4-methyl-1-cyclopentadienyl)hafniumdichlorid
Dimethylsilandiylbis(2-^{t}butyl-4-ethyl-1-cyclopentadienyl)hafniumdichlorid
Dimethylsilandiylbis(2-^{t}butyl-4-propyl-1-cyclopentadienyl)hafniumdichlorid
Dimethylsilandiylbis(2-^{t}butyl-4-butyl-1-cyclopentadienyl)hafniumdichlorid
Dimethylsilandiylbis(2-^{t}butyl-4-ⁱpropyl-1-cyclopentadienyl)hafniumdichlorid
Dimethylsilandiylbis(2-^{t}butyl-4-ⁱbutyl-1-cyclopentadienyl)hafniumdichlorid
Dimethylsilandiylbis(2-^{t}butyl-4-^{t}butyl-1-cyclopentadienyl)hafniumdichlorid
Dimethylsilandiylbis(2-^{t}butyl-4-trimethylsilyl-1-cyclopentadienyl)hafniumdichlorid
Dimethylsilandiylbis(2-^{t}butyl-4-phenyl-1-cyclopentadienyl)hafniumdichlorid
Dimethylsilandiylbis(2-trimethylsilyl-4-methyl-1-cyclopentadienyl)hafniumdichlorid
Dimethylsilandiylbis(2-trimethylsilyl-4-ethyl-1-cyclopentadienyl)hafniumdichlorid
Dimethylsilandiylbis(2-trimethylsilyl-4-propyl-l-cyclopentadienyl)hafniumdichlorid
Dimethylsilandiylbis(2-trimethylsilyl-4-butyl-1-cyclopentadienyl)hafniumdichlorid
Dimethylsilandiylbis(2-trimethylsilyl-4-ⁱpropyl-1-cyclopentadienyl)hafniumdichlorid
Dimethylsilandiylbis(2-trimethylsilyl-4-ⁱbutyl-1-cyclopentadienyl)hafniumdichlorid
Dimethylsilandiylbis(2-trimethylsilyl-4-^{t}butyl-1-cyclopentadienyl)hafniumdichlorid
Dimethylsilandiylbis(2-trimethylsilyl-4-trimethylsilyl-l-cyclopentadienyl)hafniumdichlorid
Dimethylsilandiylbis(2-trimethylsilyl-4-phenyl-1-cyclopentadienyl)hafniumdichlorid
Dimethylsilandiylbis(2-phenyl-4-methyl-l-cyclopentadienyl)hafniumdichlorid
Dimethylsilandiylbis(2-phenyl-4-ethyl-1-cyclopentadienyl)hafniumdichlorid
Dimethylsilandiylbis(2-phenyl-4-propyl-1-cyclopentadienyl)hafniumdichlorid
Dimethylsilandiylbis(2-phenyl-4-butyl-1-cyclopentadienyl)hafniumdichlorid
Dimethylsilandiylbis(2-phenyl-4-ⁱpropyl-1-cyclopentadienyl)hafniumdichlorid
Dimethylsilandiylbis(2-phenyl-4-ⁱbutyl-1-cyclopentadienyl)hafniumdichlorid
Dimethylsilandiylbis(2-phenyl-4-^{t}butyl-1-cyclopentadienyl)hafniumdichlorid
Dimethylsilandiylbis(2-phenyl-4-trimethylsilyl-1-cyclopentadienyl)hafniumdichlorid
Dimethylsilandiylbis(2-phenyl-4-phenyl-1-cyclopentadienyl)hafniumdichlorid
Dimethylsilandiylbis(2-methyl-1-indenyl)hafniumdichlorid
Dimethylsilandiylbis(2-ethyl-l-indenyl)hafniumdichlorid
Dimethylsilandiylbis(2-propyl-1-indenyl)hafniumdichlorid
Dimethylsilandiylbis(2-butyl-1-indenyl)hafniumdichlorid
Dimethylsilandiylbis(2-ⁱpropyl-1-indenyl)hafniumdichlorid
Dimethylsilandiylbis(2-^{t}butyl-1-indenyl)hafniumdichlorid
Dimethylsilandiylbis(2-trimethylsilyl-1-indenyl)hafniumdichlorid
Dimethylsilandiylbis(2-phenyl-1-indenyl)hafniumdichlorid
Dimethylsilandiylbis(2-methyl-4,5,6,7-tetra-hydro-1-indenyl)hafniumdichlorid
Dimethylsilandiylbis(2-ethyl-4,5,6,7-tetra-hydro-1-indenyl)hafniumdichlorid
Dimethylsilandiylbis(2-propyl-4,5,6,7-tetra-hydro-1-indenyl)hafniumdichlorid
Dimethylsilandiylbis(2-butyl-4,5,6,7-tetra-hydro-1-indenyl)hafniumdichlorid
Dimethylsilandiylbis(2-ⁱpropyl-4,5,6,7-tetra-hydro-1-indenyl)hafniumdichlorid
Dimethylsilandiylbis(2-^{t}butyl-4,5,6,7-tetra-hydro-1-indenyl)hafniumdichlorid
Dimethylsilandiylbis(2-trimethylsilyl-4,5,6,7-tetra-hydro-1-indenyl)hafniumdichlorid
Dimethylsilandiylbis(2-phenyl-4,5,6,7-tetra-hydro-1-indenyl)hafniumdichlorid
Dimethylsilandiylbis(2-methyl-4,7-dimethyl-1-indenyl)hafniumdichlorid
Dimethylsilandiylbis(2-ethyl-4,7-dimethyl-1-indenyl)hafniumdichlorid
Dimethylsilandiylbis(2-propyl-4,7-dimethyl-1-indenyl)hafniumdichlorid
Dimethylsilandiylbis(2-butyl-4,7-dimethyl-1-indenyl)hafniumdichlorid
Dimethylsilandiylbis(2-ipropyl-4,7-dimethyl-1-indenyl)hafniumdichlorid
Dimethylsilandiylbis(2-^{t}butyl-4,7-dimethyl-1-indenyl)hafniumdichlorid
Dimethylsilandiylbis(2-trimethylsilyl-4,7-dimethyl-1-indenyl)hafniumdichlorid
Dimethylsilandiylbis(2-phenyl-4,7-dimethyl-1-indenyl)hafniumdichlorid
Dimethylsilandiylbis(2-methyl-4,6-di-ⁱpropyl-1-indenyl)hafniumdichlorid
Dimethylsilandiylbis(2-ethyl-4,6-di-ⁱpropyl-1-indenyl)hafniumdichlorid
Dimethylsilandiylbis(2-propyl-4,6-di-ⁱpropyl-1-indenyl)hafniumdichlorid
Dimethylsilandiylbis(2-butyl-4,6-di-ⁱpropyl-1-indenyl)hafniumdichlorid
Dimethylsilandiylbis(2-ⁱpropyl-4,6-di-ⁱpropyl-1-indenyl)hafniumdichlorid
Dimethylsilandiylbis(2-^{t}butyl-4,6-di-ⁱpropyl-1-indenyl)hafniumdichlorid
Dimethylsilandiylbis(2-trimethylsilyl-4,6-di-ⁱpropyl-1-indenyl)hafniumdichlorid
Dimethylsilandiylbis(2-phenyl-4,6-di-ⁱpropyl-1-indenyl)hafniumdichlorid
Dimethylsilandiylbis(2-methyl-l-benzindenyl)hafniumdichlorid
Dimethylsilandiylbis(2-ethyl-1-benzindenyl)hafniumdichlorid
Dimethylsilandiylbis(2-propyl-1-benzindenyl)hafniumdichlorid
Dimethylsilandiylbis(2-butyl-1-benzindenyl)hafniumdichlorid
Dimethylsilandiylbis(2-ⁱpropyl-1-benzindenyl)hafniumdichlorid
Dimethylsilandiylbis(2-^{t}butyl-1-benzindenyl)hafniumdichlorid
Dimethylsilandiylbis(2-trimethylsilyl-l-benzindenyl)hafniumdichlorid
Dimethylsilandiylbis(2-phenyl-1-benzindenyl)hafniumdichlorid
Dimethylsilandiylbis(2-methyl-4-phenyl-1-indenyl)hafniumdichlorid
Dimethylsilandiylbis(2-ethyl-4-phenyl-1-indenyl)hafniumdichlorid
Dimethylsilandiylbis(2-propyl-4-phenyl-1-indenyl)hafniumdichlorid
Dimethylsilandiylbis(2-butyl-4-phenyl-l-indenyl)hafniumdichlorid
Dimethylsilandiylbis(2-ⁱpropyl-4-phenyl-1-indenyl)hafniumdichlorid
Dimethylsilandiylbis(2-^{t}butyl-4-phenyl-1-indenyl)hafniumdichlorid
Dimethylsilandiylbis(2-trimethylsilyl-4-phenyl-l-indenyl)hafniumdichlorid
Dimethylsilandiylbis(2-phenyl-4-phenyl-1-indenyl)hafniumdichlorid
Dimethylsilandiylbis(2-methyl-4-naphthyl-l-indenyl)hafniumdichlorid
Dimethylsilandiylbis(2-ethyl-4-naphthyl-1-indenyl)hafniumdichlorid
Dimethylsilandiylbis(2-propyl-4-naphthyl-1-indenyl)hafniumdichlorid
Dimethylsilandiylbis(2-butyl-4-naphthyl-1-indenyl)hafniumdichlorid
Dimethylsilandiylbis(2-ⁱpropyl-4-naphthyl-1-indenyl)hafniumdichlorid
Dimethylsilandiylbis(2-^{t}butyl-4-naphthyl-1-indenyl)hafniumdichlorid
Dimethylsilandiylbis(2-trimethylsilyl-4-naphthyl-1-indenyl)hafniumdichlorid
Dimethylsilandiylbis(2-phenyl-4-naphthyl-1-indenyl)hafniumdichlorid
sowie die analogen diphenylsilylenverbrückten Komplexe.

Die Synthese derartiger Komplexverbindungen kann nach an sich bekannten Methoden erfolgen, wobei die Umsetzung der entsprechend substituierten cyclischen Kohlenwasserstoffanionen mit Halogeniden von Titan, Zirkonium, Hafnium, Vanadium, Niob oder Tantal bevorzugt ist. Beispiele für entsprechende Herstellungsverfahren sind u.a. in Brintzinger et al., Journal of Organometallic Chemistry, 369 (1989), S. 359 - 370 beschrieben.

Die nach diesen üblichen Methoden hergestellten ansa-Metallocenkomplexe werden meist in einem Verhältnis von ca. 1 : 1 von rac.- zu meso-Form erhalten.

Bei dem erfinderungsgemäßen Verfahren der photochemischen Umwandlung kann man so vorgehen, daß man das Gemisch aus rac.- und meso-Form elektromagnetisch mit einer Wellenlänge von kleiner als 1000 nm, bevorzugt 50 bis 500 nm, beispielsweise mit einer UV-Lampe bestrahlt. Es hat sich als geeignet erwiesen, wenn die Bestrahlung bei Temperaturen von -80 bis ⁺100°C über einen Zeitraum von 0,01 bis 72 Stunden durchgeführt wird.

Erfindungsgemäß erfolgt die photochemische Umwandlung in Anwesenheit eines chiralen Hilfsreagens. Besonders geeignet sind chirale Hilfsreagenzien, die bifunktionell sind, insbesondere Dialkoholate.

Von den Dialkoholaten sind diejenigen besonders geeignet, die sich ableiten von Dialkoholen der allgemeinen Formel II 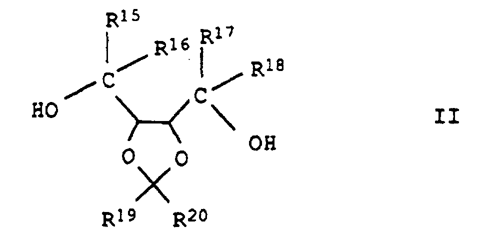 in der die Substituenten folgende Bedeutung haben:
- R¹⁵ bis R¹⁸: Wasserstoff, C₁- bis C₁₀-Alkyl oder C₆- bis C₁₅-Aryl,
- R¹⁹ und R²⁰: Wasserstoff, C₁- bis C₁₀-Alkyl, C₃- bis C₁₀-Cycloalkyl oder C₆- bis C₁₅-Aryl, oder wobei R¹⁹ und R²⁰ zusammen einen C₃- bis C₁₀-Cycloalkyl-ring bilden
oder von 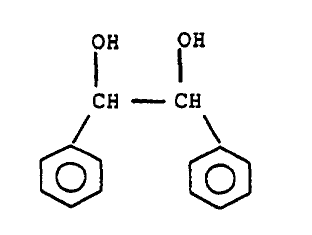 oder von 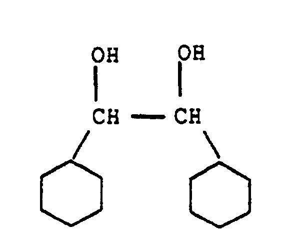 oder besonders bevorzugt von Binaphtholen, insbesondere von 1,1'-Bi-2-naphthol

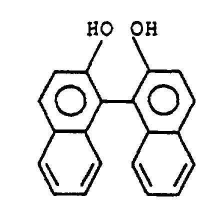

Die chiralen Dialkohole sind an sich bekannt und kommerziell erhältlich. Aus diesen Dialkoholen wird dann durch einfache Umsetzung mit einer geeigneten Base wie n-Butyllithium das Dialkoholat hergestellt, welches dann als chirales Hilfsreagens eingesetzt wird. Selbstverständlich sind auch andere chirale Verbindungen wie Dimercaptane oder Diamine als chirale Hilfsregenzien hier geeignet. Diese Verbindungen sowie Verfahren zu ihrer Herstellung sind ebenfalls an sich bekannt.

Mischungen verschiedener chiraler Hilfsreagenzien können ebenfalls eingesetzt werden.

Das molare Verhältnis von chiralem Hilfsreagens zu dem ansa-Metallocenkomplex beträgt vorzugsweise 0,1 : 1 bis 10 : 1, insbesondere 0,5 : 1 bis 1,5 : 1.

Als besonders geeignet hat es sich erwiesen, wenn man in Anwesenheit eines Lösungsmittels arbeitet. Organische Lösungsmittel wie Tetrahydrofuran, CH₂Cl₂, CHCl₃ und insbesondere aromatische Kohlenwasserstoffe wie Benzol, deuteriertes Benzol und Toluol werden bevorzugt eingesetzt. Es können auch Lösungsmittelgemische eingesetzt werden.

Als besonders geeignet hat sich folgendes Verfahren erwiesen:
Eine Mischung aus rac.- und meso-Form eines ansa-Metallocenkomplexes oder nur die meso-Form eines ansa-Metallocenkomplexes, das chirale Hilfsreagens und das Lösungsmittel werden in ein Bestrahlungsgefäß einer UV-Bestrahlungsapparatur eingefüllt, vorzugsweise unter Inertgasatmosphäre. Das chirale Hilfsreagens reagiert nun während der Bestrahlung ausschließlich mit der rac.-Form des ansa-Metallocenkomplexes zu einem photoinaktiven Folgeprodukt, während die meso-Form zur rac.-Form isomerisiert. Das photoinaktive Folgeprodukt kann nun nach an sich bekannten Methoden, wie in Brintzinger et al., Journal of Organometallic Chemistry, 232 (1982), S. 233 - 247 beschrieben, durch Umsetzung mit beispielsweise Methyllithium und anschließender Rückspaltung mit gasförmiger HCl in das rac.-Dichlorid des ansa-Metallocenkomplexes überführt werden. Alternativ kann das Alkoholat auch, wie in der JP-A 05287017 beschrieben, durch Umsetzung mit einem Metallalkyl alkyliert und in situ mit einem Kationenbildner zum polymerisationsaktiven Metalloceniumkation aktiviert werden. Bei der bevorzugten Verwendung von ansa-Metallocenkomplexen als Katalysatoren zur Herstellung von Polyolefinen kann man auch das photoinaktive Folgeprodukt (z. B. Metallocenbinaphtholat) direkt mit üblichen Cokatalysatoren, wie Alumoxanen, als aktive Katalysatorkomponente einsetzen, wie in Waymouth et al., J. Am. Chem. Soc., 112 (1990), S. 4911 - 4914 beschrieben.

Das erfindungsgemäße Verfahren liefert eine quantitative Umwandlung der achiralen meso-Form eines ansa-Metallocenkomplexes in die chirale rac.-Form, wobei das Verfahren verfahrenstechnisch einfach und kostengünstig ist. Die chirale rac.-Form eines ansa-Metallocenkomplexes findet vor allem als Katalysator für die stereospezifische Polymerisation von Olefinen Verwendung.

### Beispiele

Die photochemische Umwandlung erfolgte durch Bestrahlung mit einer Hg-Dampflampe vom Typ Phillips HPK 125W.

### Beispiel 1:

Herstellung von rac.-Dimethylsilandiylbis(2-methyl-4-tert.butyl-1-cyclopentadienyl)zirkon-1,1'-bi-2-naphtholat durch Umwandlung eines rac./meso-Gemisches

24 mg (0,05 mmol) eines rac./meso-Gemisches (Molverhältnis 1 : 1) von Dimethylsilandiylbis(2-methyl-4-tert.butyl-1-cyclopentadienyl)zirkondichlorid, 21 mg (0,07 mmol) 1,1'-Bi-2-naphtholatdilithium und 0,4 ml C₆D₆ wurden in ein NMR-Röhrchen gefüllt, eingefroren und unter Hochvakuum abgeschmolzen. Anschließend wurde das Röhrchen an der Hg-Dampflampe befestigt und über einen Zeitraum von 24 Stunden bei einer Temperatur von 40°C bestrahlt. Die quantitative Umwandlung zu rac.-Dimethylsilandiylbis-(2-methyl-4-tert.butyl-1-cyclopentadienyl)zirkon-1,1'-bi-2-naphtholat ließ sich NMR-spektroskopisch nachweisen.

¹H-NMR, Signallagen relativ zu TMS (Tetramethylsilan) in C₆D₆:

0.58 ppm (s, 6H); 0.76 ppm (s, 18H); 2.11 ppm (s, 2H); 5.59 ppm (d, 2H); 5.96 ppm (d, 2H); 6.8 - 7.3 und 7.7 - 7.82 ppm (d, 12H).

### Beispiel 2:

Herstellung von rac.-Dimethylsilandiylbis(2-methyl-4-phenyl-1-cyclopentadienyl)zirkon-1,1'-bi-2-naphtholat durch Umwandlung der meso-Form

528 mg (1mmol) meso-Dimethylsilandiylbis(2-methyl-4-phenyl-1-cyclopentadienyl)zirkondichlorid und 328 mg (1,2mmol) 1,1'-Bi-2-naphtholatdilithium wurden in ein Bestrahlungsgefäß der Hg-Dampflampe eingefüllt und in 50 ml abs. Toluol suspendiert. Die Suspension wurde durch Durchleiten eines schwachen Argonstroms durchmischt und 5 Stunden bei 30°C bestrahlt. Hierbei wurde eine rein-gelbe Lösung erhalten, in der gebildetes LiCl suspendiert war. Das LiCl wurde durch Filtration (unter Schutzgas) über Kieselgur abgetrennt und vom Filtrat wurde das Lösungsmittel abgezogen. Nach Waschen mit Pentan und Trocknen im Vakuum blieben 690 mg rac.-Dimethylsilandiylbis(2-methyl-4-phenyl-1-cyclopentadienyl)zirkon-1,1'-bi-2-naphtholat zurück [Ausbeute 93 %; ¹H-NMR [C₆D₆] : 0.66 ppm (s, 6H), 2,07 ppm (s, 6H), 5.92/5.93 ppm (d, 2H), 6.22/6.23 ppm (d, 2H), 6.45 - 7.8 pm (m, 22H)].

### Vergleichsbeispiel V1:

Umsetzung von rac./meso-Dimethylsilandiylbis(2-methyl-4-phenyl-1-cyclopentadienyl)zirkondichlorid mit 1,1'-Bi-2-naphtholatdilithium ohne Bestrahlung.

26 mg (0,05 mmol) Dimethylsilandiylbis(2-methyl-4-phenyl-1-cyclopentadienyl)zirkondichlorid (Molverhältnis rac./meso: 1 : 1) und 21 mg (0,07 mmol) 1,1'-Bi-2-naphtholatdilithium wurden in ein NMR-Röhrchen eingewogen und in 0,4 ml C₆D₆ gelöst. Nach Einfrieren der Lösung wurde das Röhrchen unter Hochvakuum abgeschmolzen und nach dem Auftauen gut durchgeschüttelt.

NMR-spektroskopisch ließ sich eine Reaktion der rac.-Diastereomeren mit dem Binaphtholat verfolgen, die nach 6h vollständig abgelaufen war: ¹H-NMR [C₆D₆]: 0.66 ppm (s, 6H), 2.07 ppm (s, 6H), 5.92/5.93 ppm (d, 2H), 6.22/6.23 ppm (d, 2H), 6.45 - 7.8 ppm (m, 22H). Dagegen waren die Signale des meso-Diastereomeren unverändert.

## Patentansprüche

1. Verfahren zur Umwandlung der achiralen meso-Form eines ansa-Metallocenkomplexes in die chirale rac.-Form, **dadurch gekennzeichnet, daß** die Umwandlung photochemisch in Anwesenheit eines chiralen Hilfsreagens erfolgt.

2. Verfahren nach Anspruch 1, **dadurch gekennzeichnet, daß** man in Anwesenheit eines organischen Lösungsmittels arbeitet.

3. Verfahren nach den Ansprüchen 1 bis 2, **dadurch gekennzeichnet, daß** die photochemische Umwandlung mit elektromagnetischer Strahlung einer Wellenlänge von kleiner als 1000 nm erfolgt.

4. Verfahren nach den Ansprüchen 1 bis 3, **dadurch gekennzeichnet, daß** das chirale Hilfsreagens bifunktionell ist.

5. Verfahren nach den Ansprüchen 1 bis 4, **dadurch gekennzeichnet, daß** als chirales Hilfsreagens ein Dialkoholat eingesetzt wird.

6. Verfahren nach den Ansprüchen 1 bis 5, **dadurch gekennzeichnet, daß** als chirales Hilfsreagens das Racemat eines Binaphtholats eingesetzt wird.

7. Verfahren nach den Ansprüchen 1 bis 6, **dadurch gekennzeichnet, daß** ansa-Metallocenkomplexe der Formel I 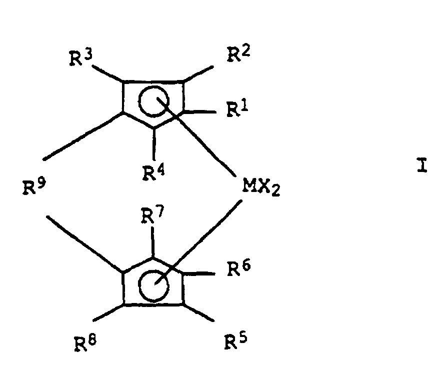 in der die Substituenten und Indices folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C6- bis C₁₅-Aryl oder -OR¹⁰,
wobei R¹⁰ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R¹ bis R⁸ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹¹)₃ mit
R¹¹ C₁- bis C₁₀-Alkyl, C₆- bis C₁₅-Aryl oder C₃- bis C₁₀-Cycloalkyl,
R⁹ 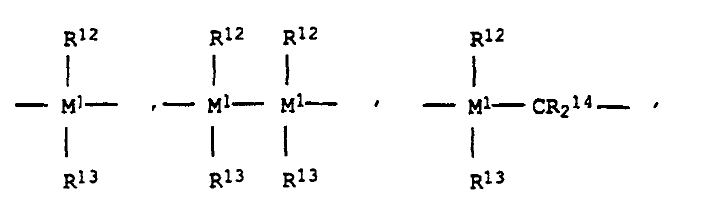 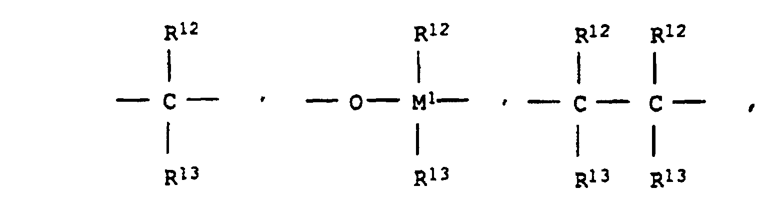 = BR¹², = AlR¹², -Ge-, -Sn-, -O-, -S-, = SO, = SO₂, = NR¹², = CO, = PR¹² oder = P(O)R¹² ist, wobei R¹², R¹³ und R¹⁴
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
M¹ Silicium, Germanium oder Zinn ist
eingesetzt werden.

8. Verfahren nach den Ansprüchen 1 bis 7, **dadurch gekennzeichnet, daß** die ansa-Metallocenkomplexe in 2-Position an den Cyclopentadienyl-Ringen substituiert sind.

9. Verfahren nach den Ansprüchen 1 bis 8, **dadurch gekennzeichnet, daß** als ansa-Metallocenkomplexe silylverbrückte Komplexe eingesetzt werden.

## Claims

1. A process for converting the achiral meso form of an ansa-metallocene complex into the chiral rac form, wherein the conversion is carried out photochemically in the presence of a chiral auxiliary reagent.

2. A process as claimed in claim 1, wherein the conversion is carried out in the presence of an organic solvent.

3. A process as claimed in claim 1 or 2, wherein the photochemical conversion is carried out using electromagnetic radiation having a wavelength of less than 1000 nm.

4. A process as claimed in any of claims 1 to 3, wherein the chiral auxiliary reagent is bifunctional.

5. A process as claimed in any of claims 1 to 4, wherein the chiral auxiliary reagent used is a dialkoxide.

6. A process as claimed in any of claims 1 to 5, wherein the chiral auxiliary reagent used is the racemate of a binaphthoxide.

7. A process as claimed in any of claims 1 to 6, wherein the ansa-metallocene complex used has the formula I 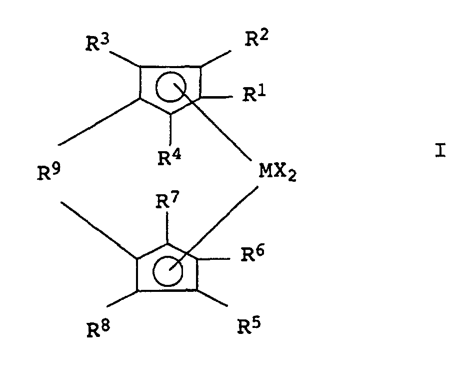 where the substituents and indices have the following meanings:
M is titanium, zirconium, hafnium, vanadium, niobium or tantalum,
X is fluorine, chlorine, bromine, iodine, hydrogen, C₁-C₁₀-alkyl, C₆-C₁₅-aryl or -OR¹⁰,
where R¹⁰ is C₁-C₁₀-alkyl, C₆-C₁₅-aryl, alkylaryl, arylalkyl, fluoroalkyl or fluoroaryl having 1 to 10 carbon atoms in the alkyl radical and from 6 to 20 carbon atoms in the aryl radical,
R¹ to R⁸ are hydrogen, C₁-C₁₀-alkyl, 5- to 7-membered cycloalkyl which may in turn bear a C₁-C₁₀-alkyl group as substituent, C₆-C₁₅-aryl or arylalkyl, where two adjacent radicals may together form a cyclic group having from 4 to 15 carbon atoms, or Si(R¹¹)₃ where
R¹¹ is C₁-C₁₀-alkyl, C₆-C₁₅-aryl or C₃-C₁₀-cycloalkyl,
R⁹ 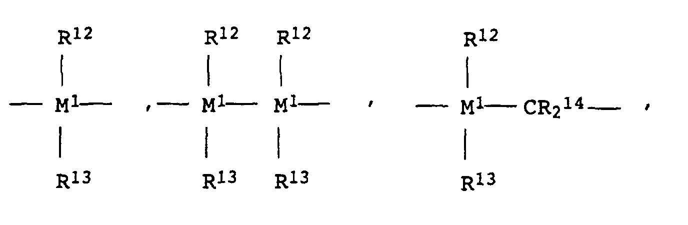 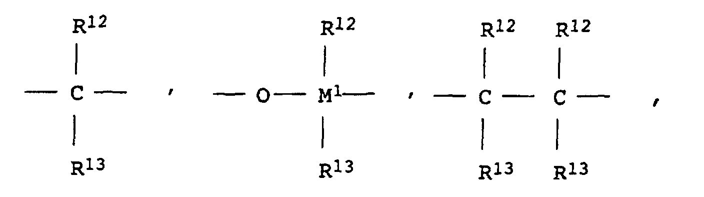 = BR¹², = AlR¹², -Ge-, -Sn-, -O-, -S-, = SO, = SO₂, = NR¹², = CO, = PR¹² or = P(O)R¹², where R¹², R¹³ and R¹⁴
are identical or different and are hydrogen, halogen, C₁-C₁₀-alkyl, C₁-C₁₀-fluoroalkyl, C₆-C₁₀-fluoroaryl, C₆-C₁₀-aryl, C₁-C₁₀-alkoxy, C₂-C₁₀-alkenyl, C₇-C₄₀-arylalkyl, C₈-C₄₀-arylalkenyl or C₇-C₄₀-alkylaryl, or R¹² and R¹³ or R¹² and R¹⁴ in each case together with the atoms connecting them form a ring, and
M¹ is silicon, germanium or tin.

8. A process as claimed in any of claims 1 to 7, wherein the ansa-metallocene complex is substituted in the 2 position of the cyclopentadienyl rings.

9. A process as claimed in any of claims 1 to 8, wherein the ansa-metallocene complex used is a silyl-bridged complex.

## Revendications

1. Procédé pour la transformation de la forme méso achirale d'un complexe ansa-métallocène vers la forme racémique chirale, **caractérisé en ce que** la transformation est réalisée de manière photochimique en présence d'un agent auxiliaire chiral.

2. Procédé selon la revendication 1, **caractérisé en ce que** l'on procède en présence d'un solvant organique.

3. Procédé selon les revendications 1 à 2, **caractérisé en ce que** la transformation photochimique est réalisée au moyen d'un rayonnement électromagnétique d'une longueur d'onde inférieure à 1 000 nm.

4. Procédé selon les revendications 1 à 3, **caractérisé en ce que** l'agent auxiliaire chiral est bifonctionnel.

5. Procédé selon les revendications 1 à 4, **caractérisé en ce que** l'on met en oeuvre un dialcoolate en tant qu'agent auxiliaire chiral.

6. Procédé selon les revendications 1 à 5, **caractérisé en ce que** l'on met en oeuvre le racémate d'un binaphtolate en tant qu'agent auxiliaire chiral.

7. Procédé selon les revendications 1 à 6, **caractérisé en ce que** l'on met en oeuvre des ansa-métallocènes de formule I 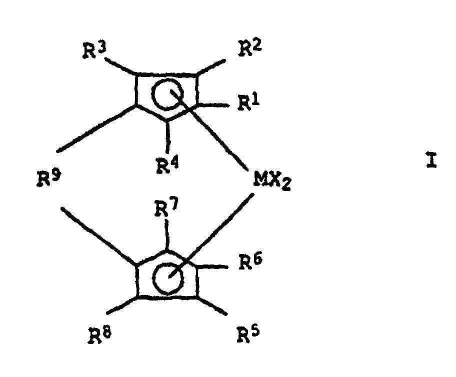 dans laquelle les substituants et les indices prennent les significations suivantes:
M représente un atome de titane, de zirconium, d'hafnium, de vanadium, de niobium ou de tantale,
X représente un atome de fluor, de chlore, de brome, d'iode, d'hydrogène, un groupe alkyle en C₁ à C₁₀, aryle en C₆ à C₁₅ ou -OR¹⁰, ou
R¹⁰ représentant un groupe alkyle en C₁ à C₁₀, aryle en C₆ à C₁₅, alkylaryle, arylalkyle, fluoroalkyle ou fluoroaryle ayant respectivement 1 à 10 atomes de C dans le résidu alkyle et 6 à 20 atomes de C dans le résidu aryle,
R¹ à R⁸ représente un atome d'hydrogène, un groupe alkyle en C₁ à C₁₀, cycloalkyle ayant 5 à 7 maillons et qui possède éventuellement en tant que substituant un groupe alkyle en C₁ à C₁₀, ou bien représente un groupe aryle ou arylalkyle en C₆ à C₁₅ dans lesquelles éventuellement deux résidus voisins représentent conjointement des groupes cycliques ayant 4 à 15 atomes de C, ou bien représente Si(R¹¹)₃, formule dans laquelle
R¹¹ représente un groupe alkyle en C₁ à C₁₀, aryle en C₆ à C₁₅ ou cycloalkyle en C₃ à C₁₀,
R⁹ représente 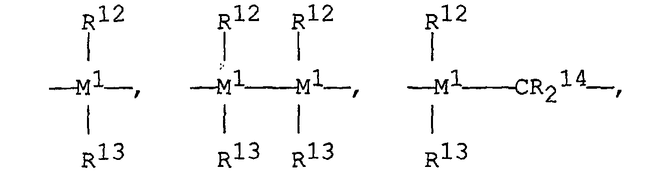 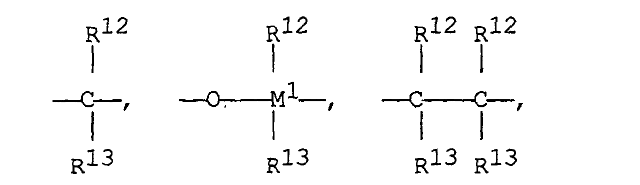 =BR¹², =AlR¹², -Ge-, -Sn-, -O-, -S-, =SO, =SO₂, =NR¹², =CO, =PR¹² ou =P(O)R¹², formules dans lesquelles R¹², R¹³ et R¹⁴
sont identiques ou différents et représentent un atome d'hydrogène ou d'halogène, un groupe alkyle en C₁ à C₁₀, fluoroalkyle en C₁ à C₁₀, fluoroaryle en C₆ à C₁₀, aryle en C₆ à C₁₀, alcoxy en C₁ à C₁₀, alcényle en C₂ à C₁₀, arylalkyle en C₇ à C₄₀, arylalcényle en C₈ à C₄₀ ou alkylaryle en C₇ à C₄₀, ou bien R¹² et R¹³ ou R¹² et R¹⁴ forment respectivement et conjointement avec les atomes qui les lient une structure cyclique, et
M¹ représente un atome de silicium, de germanium ou d'étain.

8. Procédé selon les revendications 1 à 7, **caractérisé en ce que** les cycles cyclopentadiényle des ansa-métallocènes sont substitués en position 2.

9. Procédé selon les revendications 1 à 8, **caractérisé** en ce l'on met en oeuvre des complexes ponté par un groupe silyle, en tant qu'ansa-métallocènes.
